(19) Europäisches Patentamt
European Patent Office
Office européen des brevets

(11) **EP 4 322 333 A1**

(12) **EUROPEAN PATENT APPLICATION**
published in accordance with Art. 153(4) EPC

(43) Date of publication:
**14.02.2024 Bulletin 2024/07**

(21) Application number: **22794756.1**

(22) Date of filing: **22.04.2022**

(51) International Patent Classification (IPC):
**H01Q 3/26** (2006.01)       **G01S 7/02** (2006.01)

(52) Cooperative Patent Classification (CPC):
**G01S 7/02; H01Q 1/32; H01Q 3/26; H01Q 21/06; H01Q 21/24; H01Q 23/00; H01Q 25/04**

(86) International application number:
**PCT/CN2022/088337**

(87) International publication number:
**WO 2022/228285 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2021   CN 202110482835**
**18.09.2021   CN 202111100999**

(71) Applicant: **Huawei Technologies Co., Ltd.**
**Longgang**
**Shenzhen, Guangdong 518129 (CN)**

(72) Inventors:
• **CHENG, Zhiwen**
  **Shenzhen, Guangdong 518129 (CN)**
• **LI, Ting**
  **Shenzhen, Guangdong 518129 (CN)**
• **QIN, Boya**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **ANTENNA, DETECTION DEVICE, AND TERMINAL**

(57)     This application provides an antenna, a detection apparatus, and a terminal. The antenna supports a first working mode and a second working mode. The antenna includes a first antenna subarray group (for example, the first antenna subarray group includes an antenna subarray 1a), a second antenna subarray group (for example, the first antenna subarray group includes an antenna subarray 2a), and a third antenna subarray group (for example, the first antenna subarray group includes an antenna subarray 3a). The first antenna subarray group and the second antenna subarray group are used in the first working mode, and the first antenna subarray group and the third antenna subarray group are used in the second working mode. In embodiments of this application, some antennas are reused, to help increase a quantity of equivalent virtual antennas, thereby improving angle measurement capability of the antenna.

1a       2a       3a

FIG. 4

EP 4 322 333 A1

## Description

This application claims priority to Chinese Patent Application No. 202110482835.5, filed with the China National Intellectual Property Administration on April 30, 2021 and entitled "ANTENNA, DETECTION APPARATUS, AND TERMINAL", which is incorporated herein by reference in its entirety.

This application claims priority to Chinese Patent Application No. 202111100999.3, filed with the China National Intellectual Property Administration on September 18, 2021 and entitled "ANTENNA, DETECTION APPARATUS, AND TERMINAL", which is incorporated herein by reference in its entirety.

## TECHNICAL FIELD

This application relates to the field of radar technologies, and specifically, to an antenna, a detection apparatus, and a terminal.

## BACKGROUND

With continuous improvement of automobile safety standards, conventional automobile passive safety technologies, such as seats and safety belts, airbags, and energy-absorption steering columns, cannot meet a requirement. A vehicle-mounted advanced driver assistance system (advanced driver assistance system, ADAS) emerges on the market, and a vehicle-mounted millimeter-wave radar is a standard and primary sensor of a vehicle-mounted sensor system. Because electromagnetic wave propagation in a millimeter wave band is hardly affected by weather and time, the millimeter-wave radar can implement all-weather and all-day target positioning and speed measurement.

As an autonomous driving level of an intelligent vehicle is continuously improved, a higher-resolution imaging requirement is imposed on the millimeter-wave radar, and an imaging capability of the millimeter-wave radar is required to reach or be close to a level of a general lidar. High-resolution imaging of the millimeter-wave radar features a high distance resolution, a high speed resolution, and a high angle resolution. The high distance resolution and the high speed resolution can be implemented by using a larger frequency modulation bandwidth and longer accumulation time. Generally, a bandwidth of 1G to 4G and accumulation time of 20 ms can achieve distance and speed resolutions at a centimeter (cm) level and a 0.1 m/s level (especially for a 77G millimeter-wave radar). This is easy to implement in an existing radar capability. However, the high angle resolution requires a larger antenna aperture. Therefore, a radar based on an array antenna requires more antenna array elements and more analog to digital converter (analog to digital converter, ADC) channels. In this case, the intelligent vehicle needs to reserve a larger radar installation area, and a quantity of ADC channels needs to be increased. This leads to higher costs of a current on-chip radar system.

## SUMMARY

Embodiments of this application provide an antenna, a detection apparatus, and a terminal. Some antennas are reused, to help increase a quantity of equivalent virtual antennas, thereby improving an angle measurement capability of the antenna.

According to a first aspect, an antenna is provided. The antenna supports a first working mode and a second working mode. The antenna includes a first antenna subarray group, a second antenna subarray group, and a third antenna subarray group. The first antenna subarray group and the second antenna subarray group are used in the first working mode, and the first antenna subarray group and the third antenna subarray group are used in the second working mode. In this embodiment of this application, the second antenna subarray group is reused in the first working mode and the second working mode. This helps increase a quantity of equivalent virtual antennas, to help improve an angle measurement capability of the antenna.

In some possible implementations, the antenna subarray group may include one or more antenna subarrays, and the antenna subarray may include one or more antenna elements.

With reference to the first aspect, in some implementations of the first aspect, in a first direction, there is a second antenna subarray between a first antenna subarray and a third antenna subarray. The first antenna subarray belongs to the first antenna subarray group or the third antenna subarray group. The third antenna subarray belongs to the first antenna subarray group or the third antenna subarray group. The second antenna subarray belongs to the second antenna subarray group. In addition, an antenna subarray in either of the first antenna subarray group and the third antenna subarray group is not included between the first antenna subarray and the third antenna sub array.

In this embodiment of this application, the second antenna subarray is arranged between the first antenna subarray and the third antenna subarray, and the second antenna subarray in the second antenna subarray group is reused in the first working mode and the second working mode. This helps increase a quantity of equivalent virtual antennas, to help improve an angle measurement capability of the antenna.

In some possible implementations, the first antenna subarray and the third antenna subarray are two antenna subarrays that are of the first antenna subarray group and that are adjacent to each other. Alternatively, the first antenna subarray and the third antenna subarray are two adjacent antenna subarrays of the third antenna subarray group. Alternatively, the first antenna subarray and the third antenna subarray are two antenna subarrays that are respectively in the first antenna subarray group and the third antenna subarray group and that are adjacent to each other.

With reference to the first aspect, in some implementations of the first aspect, there is one second antenna subarray between the first antenna subarray and the third antenna subarray, and in the first direction, a distance between the first antenna subarray and the second antenna subarray is equal to a distance between the second antenna subarray and the third antenna subarray.

In this embodiment of this application, the distance between the first antenna subarray and the second antenna subarray is equal to the distance between the second antenna subarray and the third antenna subarray. This helps the antenna to process a subsequent signal, and also helps simplify signal processing, to help implement high dynamics in space domain.

With reference to the first aspect, in some implementations of the first aspect, there are a plurality of second antenna subarrays between the first antenna subarray and the third antenna subarray. In the first direction, a distance between the first antenna subarray and the second antenna subarray, a distance between two adjacent second antenna subarrays, and a distance between the second antenna subarray and the third antenna subarray are equal.

In this embodiment of this application, the distance between the first antenna subarray and the second antenna subarray, the distance between two adjacent second antenna subarrays, and the distance between the second antenna subarray and the third antenna subarray are equal. This helps the antenna to process a subsequent signal, and also helps simplify signal processing, to help implement high dynamics in space domain.

With reference to the first aspect, in some implementations of the first aspect, antenna subarrays in the first antenna subarray group and the third antenna subarray group are distributed at equal spacings in the first direction.

In this embodiment of this application, the antenna subarrays in the first antenna subarray group and the third antenna subarray group are distributed at equal spacings in the first direction. This helps the antenna to process a subsequent signal, and also helps simplify signal processing, to help implement high dynamics in space domain.

With reference to the first aspect, in some implementations of the first aspect, in the first direction, the antenna further includes a fourth antenna subarray and a fifth antenna subarray that are directly adjacent to each other. The fourth antenna subarray belongs to the first antenna subarray group or the third antenna subarray group, and the fifth antenna subarray belongs to the first antenna subarray group or the third antenna subarray group.

With reference to the first aspect, in some implementations of the first aspect, a radiation distance of the antenna in the first working mode is less than a radiation distance of the antenna in the second working mode.

In some possible implementations, the first working mode may be a short-distance mode, and the second working mode may be a long-distance mode.

With reference to the first aspect, in some implementations of the first aspect, an antenna virtual aperture corresponding to the first working mode is less than an antenna virtual aperture corresponding to the second working mode.

In this embodiment of this application, in the long-distance mode, the antenna has a large antenna virtual aperture, to meet a requirement for a high angle resolution in the long-distance mode, and an unambiguous angle measurement range of the antenna also meets a field of view FOV range required in the long-distance mode. In the short-distance mode, the antenna has a small antenna virtual aperture, to meet a requirement for a large unambiguous angle measurement range and a requirement for an angle resolution in the short-distance mode.

With reference to the first aspect, in some implementations of the first aspect, the first antenna subarray and the second antenna subarray are connected to a first channel through switching, and the third antenna subarray is connected to a second channel. Optionally, the first antenna subarray and the second antenna subarray may be connected to the first channel through switching by using hardware or software, so as to implement switching between the first working mode and the second working mode. For example, the first antenna subarray and the second antenna subarray are connected to the first channel through switching by using a switch or a logic circuit.

In this embodiment of this application, the first antenna subarray and the second antenna subarray may be connected to the first channel through switching, and the third antenna subarray is connected to the second channel. In this way, a quantity of effective virtual channels is increased without increasing a quantity of back-end channels, overall array face performance is enhanced, and array face requirements in various scenarios are also met.

In some possible implementations, the first channel and the second channel may be ADC channels.

With reference to the first aspect, in some implementations of the first aspect, the antenna further includes a sixth antenna subarray, and the sixth antenna subarray is arranged in the first direction, or the sixth antenna subarray is arranged in the second direction.

In some possible implementations, antenna subarrays in the first antenna subarray group, the second antenna subarray group, and the third antenna subarray group may be receive antenna subarrays, and the sixth antenna subarray may be a transmit antenna subarray. The antenna subarrays in the first antenna subarray group, the second antenna subarray group, the third antenna subarray group, and the sixth antenna subarray are arranged in the first direction. In this case, the antenna may be a one-dimensional linear array antenna.

In some possible implementations, the first antenna subarray group, the second antenna subarray group, and the third antenna subarray group may be receive antenna subarrays, and the sixth antenna subarray may be a transmit antenna subarray. The first antenna subarray group, the second antenna subarray group, and the third antenna subarray group may be arranged in the first direction, and the sixth antenna subarray may be arranged in the second direction. In this case, the antenna may be a two-dimensional planar array antenna.

With reference to the first aspect, in some implementations of the first aspect, when the sixth antenna subarray is arranged in the second direction, the second direction is perpendicular to the first direction.

According to a second aspect, a detection apparatus is provided. The detection apparatus includes the antenna in any one of the first aspect or the possible implementations of the first aspect.

With reference to the second aspect, in some implementations of the second aspect, the detection apparatus may be a radar system.

According to a third aspect, a terminal is provided. The terminal includes the detection apparatus according to the second aspect.

With reference to the third aspect, in some implementations of the third aspect, the terminal is a vehicle.

## BRIEF DESCRIPTION OF DRAWINGS

FIG. 1 is a functional block diagram of a vehicle according to an embodiment of this application;
FIG. 2 is a schematic diagram of a structure of an antenna according to an embodiment of this application;
FIG. 3 is another schematic diagram of a structure of an antenna according to an embodiment of this application;
FIG. 4 is another schematic diagram of a structure of an antenna according to an embodiment of this application;
FIG. 5 is another schematic diagram of a structure of an antenna according to an embodiment of this application;
FIG. 6 is another schematic diagram of a structure of an antenna according to an embodiment of this application;
FIG. 7 is another schematic diagram of a structure of an antenna according to an embodiment of this application;
FIG. 8 is another schematic diagram of a structure of an antenna according to an embodiment of this application;
FIG. 9 is another schematic diagram of a structure of an antenna according to an embodiment of this application;
FIG. 10 is another schematic diagram of a structure of an antenna according to an embodiment of this application;
FIG. 11 shows a virtual MIMO array in a long-distance mode and a short-distance mode according to an embodiment of this application;
FIG. 12 is a schematic diagram of connections between Rx_G1, Rx_G2, and Rx_GC and an ADC channel according to an embodiment of this application;
FIG. 13 is another schematic diagram of a structure of an antenna according to an embodiment of this application;
FIG. 14 shows another virtual MIMO array in a long-distance mode and a short-distance mode according to an embodiment of this application;
FIG. 15 is a schematic diagram of a structure of a detection apparatus;
FIG. 16 is another schematic diagram of a structure of an antenna according to an embodiment of this application;
FIG. 17 is another schematic diagram of a structure of an antenna according to an embodiment of this application;
FIG. 18 is another schematic diagram of a structure of an antenna according to an embodiment of this application;
FIG. 19 is another schematic diagram of a structure of an antenna according to an embodiment of this application;
FIG. 20 is another schematic diagram of a structure of an antenna according to an embodiment of this application; and
FIG. 21 is another schematic diagram of a structure of an antenna according to an embodiment of this application.

## DESCRIPTION OF EMBODIMENTS

The following describes technical solutions of this application with reference to accompanying drawings.

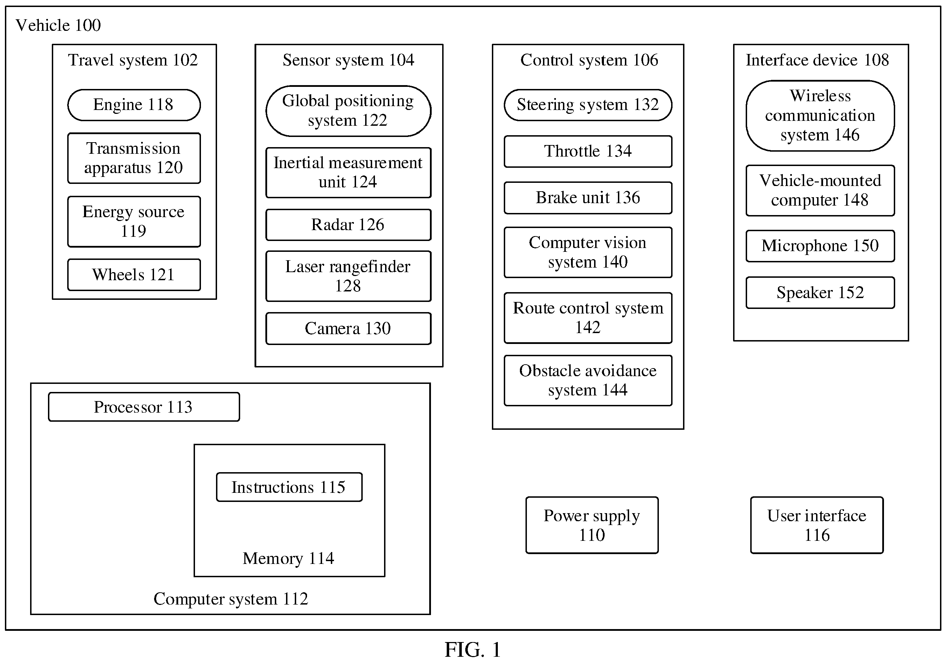

FIG. 1 is a functional block diagram of a vehicle 100 according to an embodiment of this application. In an embodiment, the vehicle 100 is configured to be in a fully autonomous driving mode or a partially autonomous driving mode. For example, the vehicle 100 in the autonomous driving mode may control the vehicle 100. A manual operation may be performed to determine current statuses of the vehicle and an ambient environment of the vehicle, determine a possible behavior of at least one another vehicle in the ambient environment, determine a confidence level corresponding to a possibility that the another vehicle performs the possible behavior, and control the vehicle 100 based on determined information. When the vehicle 100 is in the autonomous driving mode, the vehicle 100 may be configured to operate without interacting with a person.

The vehicle 100 may include various subsystems, such as a travel system 102, a sensor system 104, a control system 106, one or more interface devices 108, a power supply 110, a computer system 112, and a user interface 116. In an embodiment, the vehicle 100 may include more or fewer subsystems, and each subsystem may include a plurality of components. In addition, all the subsystems and components of the vehicle 100 may be interconnected in a wired or wireless manner.

The travel system 102 may include a component providing power to the vehicle 100 for moving. In an embodiment, the travel system 102 may include an engine 118, an energy source 119, a transmission apparatus 120, and wheels/tires 121. The engine 118 may be an internal combustion engine, an electric motor, an air compression engine, or a combination of other types of engines, such as a hybrid engine including a gasoline engine and an electric motor, or a hybrid engine including an internal combustion engine and an air compression engine. The engine 118 converts the energy source 119 into mechanical energy.

The sensor system 104 may include several sensors that can sense information about the ambient environment of the vehicle 100. For example, the sensor system 104 may include a positioning system 122 (the positioning system may be a GPS system, a BeiDou system, or another positioning system), an inertial measurement unit (inertial measurement unit, IMU) 124, a radar 126, a laser rangefinder 128, and a camera 130. The sensor system 104 may further include a sensor (for example, a vehicle-mounted air quality monitor, a fuel gauge, or an engine oil thermometer) of an internal system of the monitored vehicle 100. Sensor data from one or more of these sensors can be used to detect an object and corresponding features (a location, a shape, a direction, a speed, and the like) of the object. Such detection and recognition are key functions of a safe operation of the autonomous driving vehicle 100.

The control system 106 controls operations of the vehicle 100 and components of the vehicle 100. The control system 106 may include various components, including a steering system 132, a throttle 134, a brake unit 136, a sensor fusion algorithm 138, a computer vision system 140, a route control system 142, and an obstacle avoidance system 144.

The vehicle 100 interacts with an external sensor, another vehicle, another computer system, or a user by using the interface device 108. The interface device 108 may include a wireless communication system 146, a vehicle-mounted computer 148, a microphone 150, and/or a speaker 152.

In some embodiments, the interface device 108 provides a means for a user of the vehicle 100 to interact with the user interface 116. For example, the vehicle-mounted computer 148 may provide information to the user of the vehicle 100. The user interface 116 may further operate the vehicle-mounted computer 148 to receive an input from the user. The vehicle-mounted computer 148 may perform an operation on a touchscreen. In another case, the interface device 108 may provide a means for the vehicle 100 to communicate with another device located in the vehicle. For example, the microphone 150 may receive an audio (for example, a voice command or another audio input) from the user of the vehicle 100. Likewise, the speaker 152 may output an audio to the user of the vehicle 100.

The wireless communication system 146 may perform wireless communication with one or more devices directly or through a communication network. For example, the wireless communication system 146 implements wireless communication by using a vehicle-mounted antenna, for example, 3G cellular communication, a global system for mobile communication (global system for mobile communication, GSM) communication technology, a wideband code division multiple access (wideband code division multiple access, WCDMA) communication technology, 4G cellular communication (for example, a long term evolution (long term evolution, LTE) communication technology), or 5G cellular communication. The wireless communication system 146 may communicate with a wireless local area network (wireless local area network, WLAN) through Wi-Fi by using the vehicle-mounted antenna. In some embodiments, the wireless communication system 146 may communicate directly with a device through an infrared link or by using Bluetooth or ZigBee (ZigBee). Other wireless protocols, such as various vehicle communication systems, for example, the wireless communication system 146 may include one or more dedicated short range communication (dedicated short range communication, DSRC) devices, and these devices may include public and/or private data communication between a vehicle and/or roadside stations.

Some or all of functions of the vehicle 100 are controlled by the computer system 112. The computer system 112 may include at least one processor 113, and the processor 113 executes instructions 115 stored in a non-transient computer-readable medium, for example, a data storage apparatus 114. The computer system 112 may alternatively be a plurality of computing devices that control an individual component or a subsystem of the vehicle 100 in a distributed manner.

The user interface 116 is configured to provide information for or receive information from the user of the vehicle 100. In an embodiment, the user interface 116 may include one or more input/output devices within a set of interface devices 108, such as the wireless communication system 146, the vehicle-mounted computer 148, the microphone 150, and the speaker 152.

In an embodiment, one or more of the foregoing components may be installed separately from or associated with the vehicle 100. For example, the data storage apparatus 114 may be partially or completely separated from the vehicle 1100. The foregoing components may be communicatively coupled together in a wired and/or wireless manner.

In an embodiment, the foregoing components are merely examples. In actual application, components in the foregoing modules may be added or deleted according to an actual requirement. FIG. 1 should not be understood as a limitation on embodiments of this application.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of this application.

A resolution of the radar for measuring an angle, a distance, and a speed has great impact on safety of driving. A smaller value of the resolution indicates a higher resolution. The radar may be a multiple-input multiple-output (multiple-input multiple-output, MIMO) radar. For example, an angle resolution $\rho_\theta$ of the MIMO radar may be represented as:

$$\rho_\theta = \frac{\lambda}{D\cos\theta}$$

D represents a virtual aperture of a radar transceiver antenna, $\theta$ represents an angle of a target relative to a preset direction with the radar as a center, and $\lambda$ represents a wavelength. A direction in which the target is located may be indicated by the angle $\theta$.

A MIMO radar array reduces quantities of physical antennas and ADC channels required by a same quantity of array elements to a specific extent. The MIMO radar array uses M transmit antennas, N receive antennas, and N ADC channels in a form of a virtual aperture to implement M•N equivalent arrays and M•N equivalent channels. This greatly reduces the quantity of physical antennas, an antenna array size, and costs of the ADC channels. Therefore, the MIMO radar array is widely used in vehicle-mounted millimeter-wave radars.

An embodiment of this application provides an antenna. The antenna may support a first working mode and a second working mode. The antenna may include a first antenna subarray group, a second antenna subarray group, and a third antenna subarray group. The first antenna subarray group and the second antenna subarray group may be used in the first working mode, and the first antenna subarray group and the third antenna subarray group may be used in the second working mode.

In this embodiment of this application, the second antenna subarray group is reused in the first working mode and the second working mode. This helps increase a quantity of equivalent virtual antennas, to help improve an angle measurement capability of the antenna.

It should be understood that, in this embodiment of this application, quantities of antenna subarrays in the first antenna subarray group, the second antenna subarray group, and the third antenna subarray group are not specifically limited.

It should be further understood that the antenna subarray group in this embodiment of this application may include one or more antenna subarrays, and the antenna subarray may include one or more antenna elements.

Optionally, the antenna subarrays in the first antenna subarray group, the second antenna subarray group, and the third antenna subarray group may be transmit antennas, or may be receive antennas.

In this embodiment of this application, the second antenna subarray group is reused in the first working mode and the second working mode. This helps increase a quantity of equivalent virtual antennas, to help improve an angle measurement capability of the antenna.

Optionally, in a first direction, there is a second antenna subarray between a first antenna subarray and a third antenna subarray. The first antenna subarray belongs to the first antenna subarray group or the third antenna subarray group. The third antenna subarray belongs to the first antenna subarray group or the third antenna subarray group. The second antenna subarray belongs to the second antenna subarray group. In addition, an antenna subarray in either of the first antenna subarray group and the third antenna subarray group is not included between the first antenna subarray and the third antenna subarray.

In this embodiment of this application, the second antenna subarray is arranged between the first antenna subarray and the third antenna subarray, and the second antenna subarray in the second antenna subarray group is reused in the first working mode and the second working mode, to implement virtual apertures of different density degrees in the two modes, and flexibly implement (azimuth or pitch) angle measurement requirements in different modes. In addition, the second antenna subarray is inserted between the first antenna subarray and the third antenna subarray, so that miniaturization of an antenna structure can be implemented.

It should be understood that one second antenna subarray or a plurality of second antenna subarrays may be included between the first antenna subarray and the third antenna subarray. This is not limited in embodiments of this application.

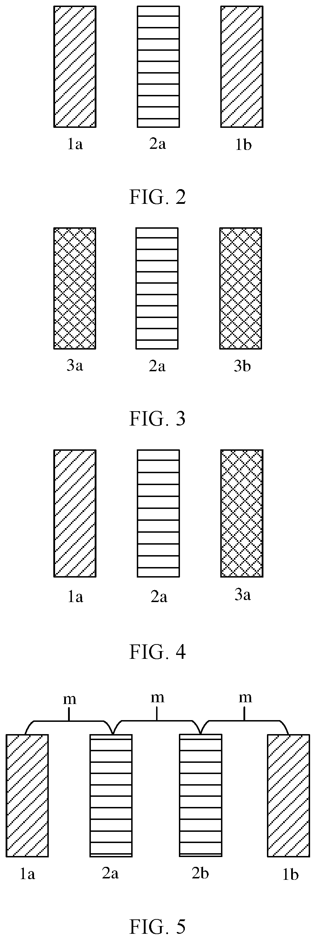

Optionally, both the first antenna subarray and the third antenna subarray may belong to the first antenna subarray group. For example, FIG. 2 is a schematic diagram of the structure of the antenna according to an embodiment of this application. The first antenna subarray may be an antenna subarray 1a, the third antenna subarray may be an antenna subarray 1b, and the second antenna subarray may be an antenna subarray 2a. The antenna subarray 2a is arranged between the antenna subarray 1a and the antenna subarray 1b.

Optionally, both the first antenna subarray and the third antenna subarray may belong to the third antenna subarray group. For example, FIG. 3 is another schematic diagram of the structure of the antenna according to an embodiment of this application. The first antenna subarray may be an antenna subarray 3a, the third antenna subarray may be an antenna subarray 3b, and the second antenna subarray may be an antenna subarray 2a. The antenna subarray 2a is arranged between the antenna subarray 3a and the antenna subarray 3b.

Optionally, the first antenna subarray may belong to the first antenna subarray group, and the third antenna subarray may belong to the third antenna subarray group. For example, FIG. 4 is another schematic diagram of the structure of the antenna according to an embodiment of this application. The first antenna subarray may be an antenna subarray 1a, the third antenna subarray may be an antenna subarray 3a, and the second antenna subarray may be an antenna subarray 2a. The antenna subarray 2a is arranged between the antenna subarray 1a and the antenna subarray 3a.

Optionally, the first antenna subarray may belong to the third antenna subarray group, and the third antenna subarray may belong to the first antenna subarray group.

It should be understood that the antenna subarray in either of the first antenna subarray group and the third antenna subarray group is not included between the first antenna subarray and the third antenna subarray. This may be further understood as that the first antenna subarray and the third antenna subarray are two adjacent antenna subarrays in the first antenna subarray group, or the first antenna subarray and the third antenna subarray are two adjacent antenna subarrays in the third antenna subarray group, or the first antenna subarray and the third antenna subarray are two adjacent antenna subarrays that are respectively in the first antenna subarray group and the third antenna subarray group.

Optionally, there is one second antenna subarray between the first antenna subarray and the third antenna subarray, and in the first direction, a distance between the first antenna subarray and the second antenna subarray may be equal to a distance between the second antenna subarray and the third antenna subarray.

In this embodiment of this application, the distance between the first antenna subarray and the second antenna subarray is equal to the distance between the second antenna subarray and the third antenna subarray. This helps simplify signal processing, to help implement high dynamics in space domain.

For example, as shown in FIG. 2, a distance between the antenna subarray 1a and the antenna subarray 2a may be equal to a distance between the antenna subarray 1b and the antenna subarray 2a.

For example, as shown in FIG. 3, a distance between the antenna subarray 3a and the antenna subarray 2a may be equal to a distance between the antenna subarray 3b and the antenna subarray 2a.

For example, as shown in FIG. 4, a distance between the antenna subarray 1a and the antenna subarray 2a may be equal to a distance between the antenna subarray 3a and the antenna subarray 2a.

Optionally, when there is one second antenna subarray between the first antenna subarray and the third antenna subarray, and in the first direction, the distance between the first antenna subarray and the second antenna subarray may be unequal to the distance between the second antenna subarray and the third antenna subarray.

Optionally, when there are a plurality of second antenna subarrays between the first antenna subarray and the third antenna subarray, in the first direction, a distance between the first antenna subarray and the second antenna subarray, a distance between two adjacent second antenna subarrays, and a distance between the second antenna subarray and the third antenna subarray may be equal.

In this embodiment of this application, the distance between the first antenna subarray and the second antenna subarray, the distance between two adjacent second antenna subarrays, and the distance between the second antenna subarray and the third antenna subarray are equal. This helps simplify signal processing, to help implement high dynamics in space domain.

It should be understood that the distance between the first antenna subarray and the second antenna subarray may be a distance between the first antenna subarray and a second antenna subarray that is of the plurality of second antenna subarrays and that is close to the first antenna subarray. The distance between the second antenna subarray and the third antenna subarray may be a distance between a second antenna subarray that is of the plurality of second antenna subarrays and that is close to the third antenna subarray and the third antenna subarray.

For example, FIG. 5 is another schematic diagram of the structure of the antenna according to an embodiment of this application. The first antenna subarray may be an antenna subarray 1a, the third antenna subarray may be an antenna subarray 1b, and two second antenna subarrays (an antenna subarray 2a and an antenna subarray 2b) may be included between the antenna subarray 1a and the antenna subarray 1b. A distance between the antenna subarray 1a and the antenna subarray 2a, a distance between the antenna subarray 2a and the antenna subarray 2b, and a distance between the antenna subarray 2b and the antenna subarray 1b may be equal (for example, the distance may be m).

It should be understood that, in FIG. 5, an example in which two second antenna subarrays are arranged between the first antenna subarray and the third antenna subarray is used for description, and another quantity (for example, three or four) of second antenna subarrays may alternatively be arranged between the first antenna subarray and the third antenna subarray.

Optionally, antenna subarrays in the first antenna subarray group and the third antenna subarray group may be distributed at equal spacings in the first direction. Therefore, the antenna structure design is simple and easy to implement.

In this embodiment of this application, the antenna subarrays in the first antenna subarray group and the third antenna subarray group are distributed at equal spacings in the first direction. This helps simplify signal processing, to help implement high dynamics in space domain.

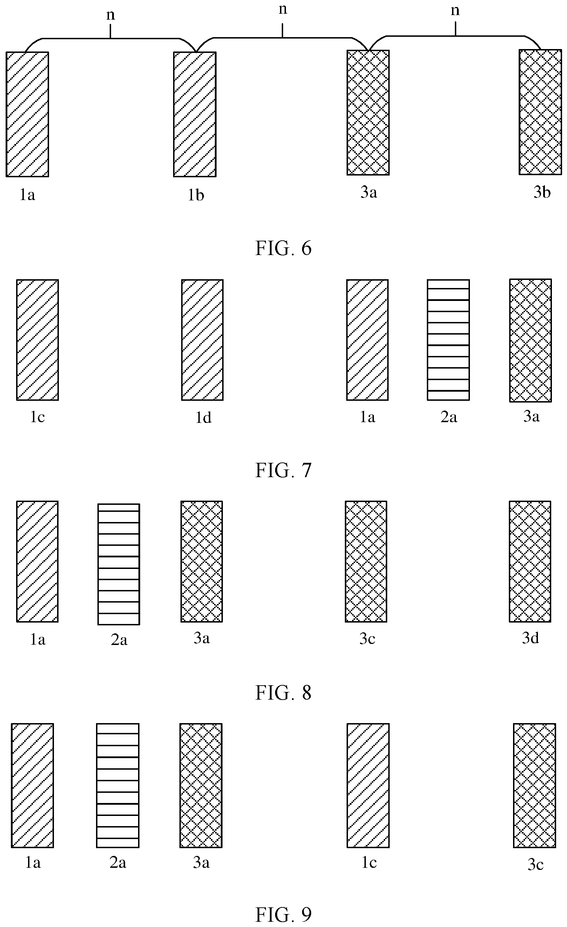

For example, FIG. 6 is another schematic diagram of the structure of the antenna according to an embodiment of this application. In the first direction, the first antenna subarray group may include an antenna subarray 1a and an antenna subarray 1b, and the third antenna subarray group may include an antenna subarray 3a and an antenna subarray 3b. A distance between the antenna subarray 1a and the antenna subarray 1b, a distance between the antenna subarray 1b and the antenna subarray 3a, and a distance between the antenna subarray 3a and the antenna subarray 3b may be equal (for example, the distance may be n).

Optionally, n is greater than m.

It should be understood that, in FIG. 6, an example in which the first antenna subarray group includes two antenna subarrays and the third antenna subarray group includes two antenna subarrays is used for description. In this embodiment of this application, a quantity of antenna subarrays in the first antenna subarray group may be another quantity (for example, 3 or 4), and a quantity of antenna subarrays in the third antenna subarray group may be another quantity (for example, 3 or 4). The quantity of antenna subarrays in the first antenna subarray group may be equal to or unequal to the quantity of antenna subarrays in the third antenna subarray group.

It should be further understood that in the antenna structure shown in FIG. 6, the antenna subarray 1a, the antenna subarray 1b, the antenna subarray 3a, and the antenna subarray 3b may be sequentially arranged. Alternatively, the antenna subarray 3a, the antenna subarray 3b, the antenna subarray 1a, and the antenna subarray 1b may be sequentially arranged. Alternatively, the antenna subarray 1a, the antenna subarray 3a, the antenna sub array 1b, and the antenna subarray 3b may be sequentially arranged.

Optionally, the antenna structure shown in FIG. 6 further includes an antenna subarray 2a of the second antenna subarray group. The antenna subarray 1a, the antenna subarray 2a, the antenna subarray 1b, the antenna subarray 3a, and the antenna subarray 3b may be sequentially arranged. Alternatively, the antenna subarray 1a, the antenna subarray 2a, the antenna subarray 1b, the antenna subarray 2a, the antenna subarray 3a, and the antenna subarray 3b may be sequentially arranged. Alternatively, the antenna subarray 1a, the antenna subarray 2a, the antenna subarray 1b, the antenna subarray 2a, the antenna subarray 3a, the antenna subarray 2a, and the antenna subarray 3b may be sequentially arranged. Alternatively, the antenna subarray 1a, the antenna subarray 2a, the antenna subarray 2a, the antenna subarray 1b, the antenna subarray 1b, the antenna subarray 3a, the antenna subarray 2a, and the antenna subarray 3b may be sequentially arranged. Alternatively, the antenna subarray 1a, the antenna subarray 2a, the antenna subarray 2a, the antenna subarray 1b, the antenna subarray 1b, the antenna subarray 3a, and the antenna subarray 3b may be sequentially arranged.

It can be learned that there may be at least one antenna subarray in the second antenna subarray group between all or some antenna subarrays in the first antenna subarray group, there may be at least one antenna subarray in the second antenna subarray group between all or some antenna subarrays in the third antenna subarray group, and there may be an antenna subarray or no antenna subarray in the second antenna subarray group between adjacent antenna subarrays in the first antenna subarray group and the third antenna subarray group. In this way, the antenna subarray in the second antenna subarray group may be flexibly embedded between the first antenna subarray group and the third antenna subarray group or in the first antenna subarray group and the third antenna subarray group, so that an antenna structure design is flexible.

Optionally, antenna subarrays in the first antenna subarray group and the third antenna subarray group may alternatively be not distributed at equal spacings. In this way, each antenna subarray group may be separately designed, and may be designed according to an actual requirement, so that an antenna design is more flexible.

Optionally, in the first direction, the antenna further includes a fourth antenna subarray and a fifth antenna subarray that are directly adjacent to each other. The fourth antenna subarray belongs to the first antenna subarray group or the third antenna subarray group, and the fifth antenna subarray belongs to the first antenna subarray group or the third antenna subarray group.

Optionally, both the fourth antenna subarray and the fifth antenna subarray may belong to the first antenna subarray group. FIG. 7 is another schematic diagram of the structure of the antenna according to an embodiment of this application. The first antenna subarray group includes an antenna subarray 1a, and the third antenna subarray group includes an antenna subarray 3a. The fourth antenna subarray may be an antenna subarray 1c, and the fifth antenna subarray may be an antenna subarray 1d. The antenna subarray 1c, the antenna subarray 1d, the antenna subarray 1a, and the antenna subarray 3a may be arranged in the first direction. One or more second antenna subarrays (such as an antenna subarray 2a) may be located between the antenna subarray 1a and the antenna subarray 3a.

It should be understood that there may also be one or more second antenna subarrays between the antenna subarray 1c and the antenna subarray 1d, and one or more second antenna subarrays between the antenna subarray 1d and the antenna subarray 1a.

Optionally, both the fourth antenna subarray and the fifth antenna subarray may belong to the third antenna subarray group. FIG. 8 is another schematic diagram of the structure of the antenna according to an embodiment of this application. The first antenna subarray group includes an antenna subarray 1a, and the third antenna subarray group includes an antenna subarray 3a. The fourth antenna subarray may be an antenna subarray 3c, and the fifth antenna subarray may be an antenna subarray 3d. The antenna sub array 1a, the antenna subarray 3a, the antenna sub array 3c, and the antenna subarray 3d may be arranged in the first direction. One or more second antenna subarrays (such as an antenna subarray 2a) may be located between the antenna subarray 1a and the antenna subarray 3a.

It should be understood that there may also be one or more second antenna subarrays between the antenna subarray 3a and the antenna subarray 3c, and one or more second antenna subarrays between the antenna subarray 3c and the antenna subarray 3d.

Optionally, the fourth antenna subarray may belong to the first antenna subarray group, and the fifth antenna subarray may belong to the third antenna subarray group. FIG. 9 is another schematic diagram of the structure of the antenna according to an embodiment of this application. The first antenna subarray group includes an antenna subarray 1a, and the third antenna subarray group includes an antenna subarray 3a. The fourth antenna subarray may be an antenna subarray 1c, and the fifth antenna subarray may be an antenna subarray 3c. The antenna subarray 1a, the antenna subarray 3a, the antenna subarray 1c, and the antenna subarray 3c may be arranged in the first direction. One or more second antenna subarrays (such as an antenna subarray 2a) may be located between the antenna subarray 1a and the antenna subarray 3a.

It should be understood that there may also be one or more second antenna subarrays between the antenna subarray 3a and the antenna subarray 1c, and one or more second antenna subarrays between the antenna subarray 1c and the antenna subarray 3c.

Optionally, a radiation distance of the antenna in the first working mode is less than a radiation distance of the antenna in the second working mode.

Optionally, the first working mode may be a short-distance mode, and the second working mode may be a long-distance mode.

It should be understood that when the antenna is used for a detection apparatus, the radiation distance may also be referred to as a detection distance.

Generally, a radar needs to cover several areas with different distances. Therefore, working modes may be first simply classified into the long-distance mode and the short-distance mode. Due to different radar detection requirements for the long-distance mode and the short-distance mode, there are different index requirements. In the short-distance mode, a field of view (field of view, FOV) of a radar needs to be large, so that an entire road can be covered. However, a required angle resolution is low because a target is close. In the long-distance mode, a required angle resolution is high, but an FOV requirement is low. Therefore, in an array face design of a millimeter-wave radar, FOVs of an antenna in the long-distance mode and the short-distance mode and angle resolutions in the long-distance mode and the short-distance mode are adjusted according to different requirements of the long-distance mode and the short-distance mode, to provide a most economical and practical array arrangement while meeting requirements in all scenarios.

Optionally, an antenna virtual aperture corresponding to the first working mode is less than an antenna virtual aperture corresponding to the second working mode.

In this embodiment of this application, in the long-distance mode, the antenna has a large antenna virtual aperture, to meet a requirement for a high angle resolution in the long-distance mode, and an unambiguous angle measurement range of the antenna also meets a field of view FOV range required in the long-distance mode. In the short-distance mode, the antenna has a small antenna virtual aperture, to meet a requirement for a large unambiguous angle measurement range and a requirement for an angle resolution in the short-distance mode.

Optionally, the first antenna subarray and the second antenna subarray are connected to a first channel through switching, and the third antenna subarray is connected to a second channel.

In this embodiment of this application, the first antenna subarray and the second antenna subarray may be connected to the first channel through switching, and the third antenna subarray is connected to the second channel. In this way, a quantity of effective virtual channels is increased without increasing a quantity of back-end channels, overall array face performance is enhanced, and array face requirements in various scenarios are also met.

Optionally, the first channel and the second channel may be back-end data collection channels, ADC channels, radio frequency channels, or the like.

Optionally, the antenna further includes a sixth antenna subarray, and the sixth antenna subarray is arranged in the first direction, or the sixth antenna subarray is arranged in the second direction.

Optionally, antenna subarrays in the first antenna subarray group, the second antenna subarray group, and the third antenna subarray group may be receive antenna subarrays, and the sixth antenna subarray may be a transmit antenna subarray. The antenna subarrays in the first antenna subarray group, the second antenna subarray group, the third antenna subarray group, and the sixth antenna subarray are arranged in the first direction. In this case, the antenna may be a one-dimensional linear array antenna.

Optionally, the first antenna subarray group, the second antenna subarray group, and the third antenna subarray group may be receive antenna subarrays, and the sixth antenna subarray may be a transmit antenna subarray. The first antenna subarray group, the second antenna subarray group, and the third antenna subarray group may be arranged in the first direction, and the sixth antenna subarray may be arranged in the second direction. In this case, the antenna may be a two-dimensional planar array antenna.

Optionally, the first antenna subarray group, the second antenna subarray group, and the third antenna subarray group may be arranged in the first direction, and the sixth antenna may be arranged in the second direction. In this case, the antenna may be a two-dimensional planar array antenna.

Optionally, when the sixth antenna subarray is arranged in the second direction, the second direction is perpendicular to the first direction.

It should be understood that, in the antenna structures shown in FIG. 2 to FIG. 9, the antenna subarrays may be distributed at equal spacings, or may not be distributed at equal spacings. Alternatively, some of the antenna subarrays are distributed at equal spacings, and the other of the antenna subarrays are not distributed at equal spacings. This is not limited in embodiments of this application.

It should be further understood that, in the antenna structures shown in FIG. 2 to FIG. 9, the antenna subarrays may alternatively be distributed in the first direction, but two antenna subarrays may be staggered by a specific distance in the second direction, and the first direction and the second direction may be perpendicular to each other.

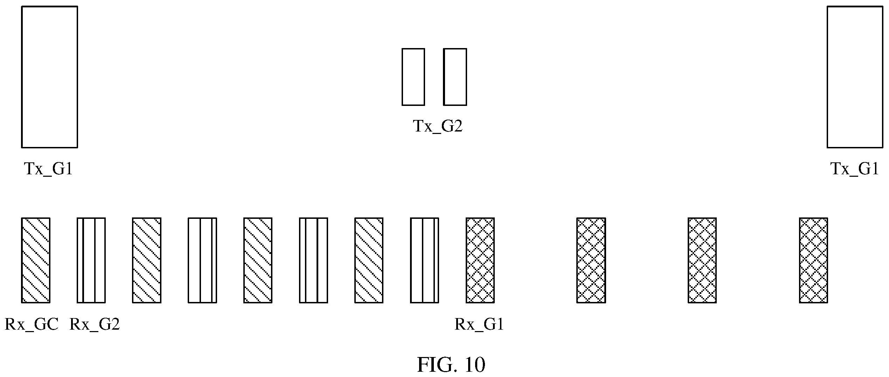

FIG. 10 is a schematic diagram of a structure of an antenna according to an embodiment of this application. The antenna includes a transmit antenna array and a receive antenna array. The transmit antenna array includes Tx_G1 (including two transmit antenna subarrays) and Tx_G2 (including two transmit antenna subarrays). Tx_G1 is a transmit antenna in a long-distance mode, Tx_G2 is a transmit antenna in a short-distance mode, and a gain of Tx_G1 is greater than a gain of Tx_G2.

The receive antenna array includes Rx_G1 (including four receive antenna subarrays), Rx_G2 (including four receive antenna subarrays), and Rx_GC (including four receive antenna subarrays). As shown in FIG. 10, Rx_G1 and Rx_GC form a receive antenna array in the long-distance mode, and the receive antenna array in the long-distance mode meets features of a large aperture and a small unambiguous FOV Rx_G2 is arranged between any two adjacent antenna subarrays in Rx_GC and between two antenna subarrays that are respectively in Rx_G1 and Rx_GC and that are adjacent to each other according to a specific rule. Rx_G2 and Rx_GC form a receive antenna array in the short-distance mode. Compared with the receive antenna array in the long-distance mode, the receive antenna array in the short-distance mode has a smaller aperture, but a larger unambiguous FOV A quantity of antenna subarrays of Rx_G2 between every two adjacent antenna subarrays in a first antenna subarray group Rx_GC may be the same or different. Optionally, the antenna subarrays of Rx_G2 may be evenly or centrosymmetrically inserted into all antenna subarrays of the first antenna subarray group Rx_GC. Alternatively, the antenna subarrays of Rx_G2 may be evenly or centrosymmetrically inserted into some antenna subarrays of the first antenna subarray group Rx_GC. For example, in FIG. 10, there is a same quantity of antenna subarrays of Rx_G2 (for example, one) between two antenna subarrays in the first antenna subarray group Rx_GC, and there is also one antenna subarray of Rx_G2 between the antenna subarray of the first antenna subarray group Rx_GC and the adjacent antenna subarray of the third antenna subarray group Rx_G1. Optionally, a quantity of antenna subarrays of Rx_G2 between every two adjacent antenna subarrays in the third antenna subarray group Rx_G1 may be the same or different. Optionally, the antenna subarrays of Rx_G2 may be evenly or centrosymmetrically inserted into all antenna subarrays of the third antenna subarray group Rx_G1. Alternatively, the antenna subarrays of Rx_G2 may be evenly or centrosymmetrically inserted into some antenna subarrays of the third antenna subarray group Rx_G1. Optionally, the quantity of antenna subarrays of Rx_G2 between the antenna subarray of the first antenna subarray group Rx_GC and the adjacent antenna subarray of the third antenna subarray group Rx_G1 may be the same as or different from the quantity of antenna subarrays of Rx_G2 in two adjacent antenna subarrays of the first antenna subarray group Rx_GC. Alternatively, the quantity of antenna subarrays of Rx_G2 between the antenna subarray of the first antenna subarray group Rx_GC and the adjacent antenna subarray of the third antenna subarray group Rx_G1 may be the same as or different from the quantity of antenna subarrays of Rx_G2 in two adjacent antenna subarrays of the third antenna subarray group Rx_G1.

In the long-distance mode, the antenna works by using Tx_G1, Rx_G1, and Rx_GC. In the short-distance mode, the antenna works by using Tx_G2, Rx_G2, and Rx_GC.

In an embodiment, types of antenna subarrays in Rx_G1, Rx_G2, and Rx_GC are the same, or gains of antenna subarrays in Rx_G1, Rx_G2, and Rx_GC are the same.

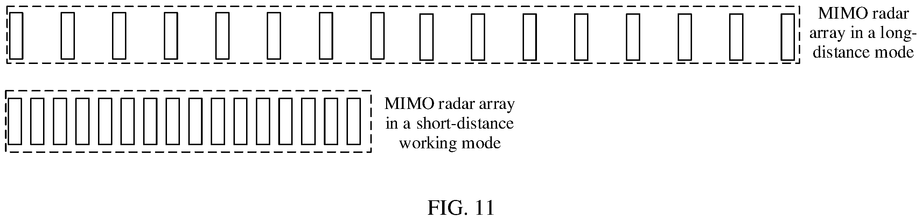

FIG. 11 shows a virtual MIMO array for the long-distance mode and the short-distance mode shown in FIG. 10. It can be learned that, in the long-distance mode, a uniform sparse linear array is formed on a radar array face, and the array has a large antenna aperture, so that a requirement for a high angle resolution in the long-distance mode can be met. In the short-distance mode, a compact (for example, a half-wavelength spacing) uniform array is formed on the radar array face, so that a requirement for a large unambiguous angle measurement range and a requirement for an angle resolution in the short-distance mode can be met.

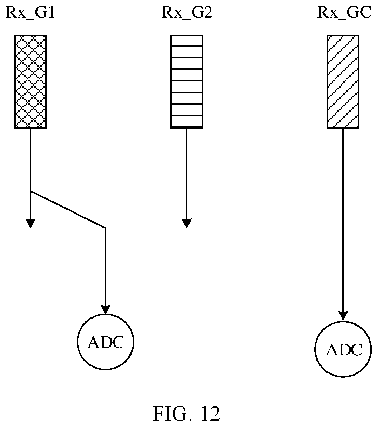

FIG. 12 is a schematic diagram of connections between Rx_G1, Rx_G2, and Rx_GC and an ADC channel. As shown in FIG. 12, Rx_GC is separately provided with an ADC channel, Rx_G1 and Rx_G2 use a same ADC unit through switching, and a switching manner includes but is not limited to radio frequency switch switching, digital end low voltage differential signal (low voltage differential signaling, LVDS) switching, and the like.

In this embodiment of this application, when quantities of ADC channels and physical antennas are not increased, some antennas are reused based on different requirements for angle resolution and FOV in a long-distance mode and a short-distance mode, so that a quantity of equivalent virtual antennas in an entire system mode is greatly increased. In this way, an azimuth angle measurement capability of the system can be improved.

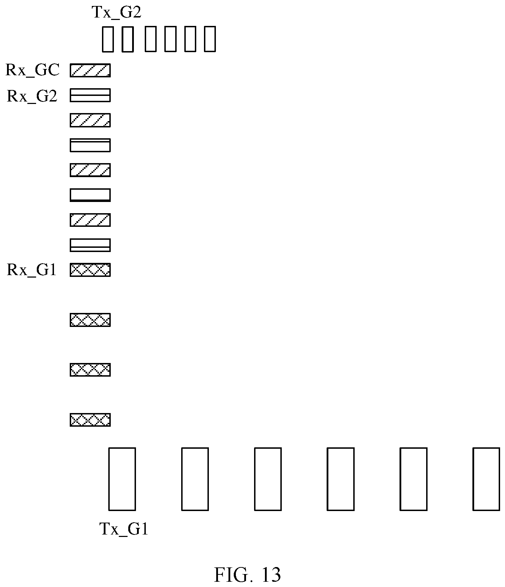

The antenna shown above with reference to FIG. 10 is a one-dimensional linear array antenna, and a horizontal angle of a measurement target is considered. With reference to another schematic diagram of a structure of an antenna shown in FIG. 13, the antenna is a two-dimensional planar array antenna.

As shown in FIG. 13, the antenna includes a transmit antenna array and a receive antenna array. The transmit antenna array includes Tx_G1 (including six transmit antenna subarrays) and Tx_G2 (including six transmit antenna subarrays). Tx_G1 is a transmit antenna in the long-distance mode, Tx_G2 is a transmit antenna in the short-distance mode, and a gain of Tx_G1 is greater than a gain of Tx_G2.

The receive antenna array includes Rx_G1 (including four receive antenna subarrays), Rx_G2 (including four receive antenna subarrays), and Rx_GC (including four receive antenna subarrays). As shown in FIG. 13, Rx_G1 and Rx_GC form a receive antenna array in the long-distance mode, and the receive antenna array in the long-distance mode meets features of a large aperture and a small unambiguous FOV Rx_G2 is arranged between any two adjacent antenna subarrays in Rx_GC and between two antenna subarrays that are respectively in Rx_G1 and Rx_GC and that are adjacent to each other according to a specific rule. Rx_G2 and Rx_GC form a receive antenna array in the short-distance mode. Compared with the receive antenna array in the long-distance mode, the receive antenna array in the short-distance mode has a smaller aperture, but a larger unambiguous FOV A quantity of antenna subarrays of Rx_G2 between every two adjacent antenna subarrays in a first antenna subarray group Rx_GC may be the same or different. Optionally, the antenna subarrays of Rx_G2 may be evenly or centrosymmetrically inserted into all antenna subarrays of the first antenna subarray group Rx_GC. Alternatively, the antenna subarrays of Rx_G2 may be evenly or centrosymmetrically inserted into some antenna subarrays of the first antenna subarray group Rx_GC. For example, in FIG. 13, there is a same quantity of antenna subarrays of Rx_G2 (for example, one) between two antenna subarrays in the first antenna subarray group Rx_GC, and there is also one antenna subarray of Rx_G2 between the antenna subarray of the first antenna subarray group Rx_GC and the adjacent antenna subarray of the third antenna subarray group Rx_G1. Optionally, a quantity of antenna subarrays of Rx_G2 between every two adjacent antenna subarrays in the third antenna subarray group Rx_G1 may be the same or different. Optionally, the antenna subarrays of Rx_G2 may be evenly or centrosymmetrically inserted into all antenna subarrays of the third antenna subarray group Rx_G1. Alternatively, the antenna subarrays of Rx_G2 may be evenly or centrosymmetrically inserted into some antenna subarrays of the third antenna subarray group Rx_G1. Optionally, the quantity of antenna subarrays of Rx_G2 between the antenna subarray of the first antenna subarray group Rx_GC and the adjacent antenna subarray of the third antenna subarray group Rx_G1 may be the same as or different from the quantity of antenna subarrays of Rx_G2 in two adjacent antenna subarrays of the first antenna subarray group Rx_GC. Alternatively, the quantity of antenna subarrays of Rx_G2 between the antenna subarray of the first antenna subarray group Rx_GC and the adjacent antenna subarray of the third antenna subarray group Rx_G1 may be the same as or different from the quantity of antenna subarrays of Rx_G2 in two adjacent antenna subarrays of the third antenna subarray group Rx_G1.

In the long-distance mode, the antenna works by using Tx_G1, Rx_G1, and Rx_GC. In the short-distance mode, the antenna works by using Tx_G2, Rx_G2, and Rx_GC.

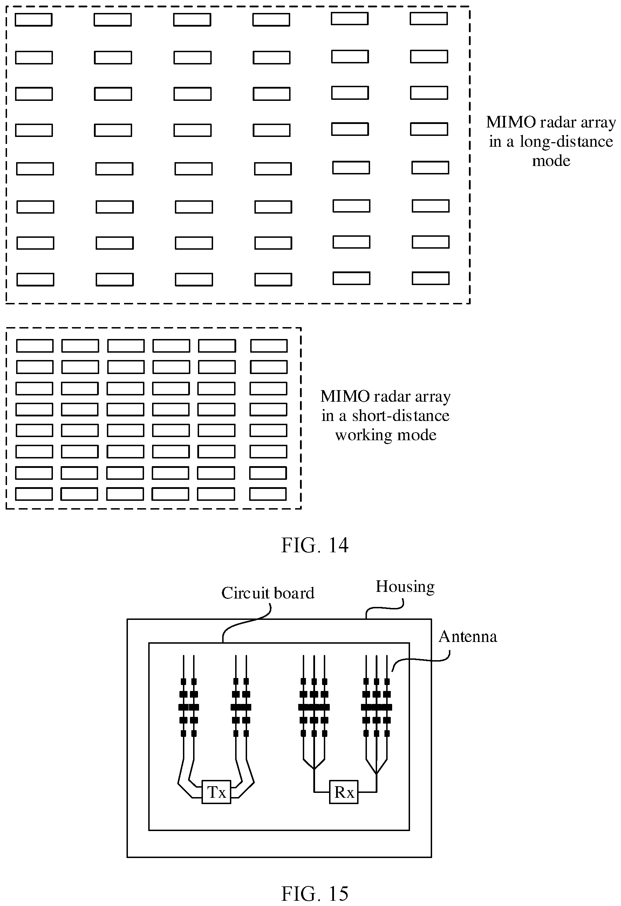

FIG. 14 shows a virtual MIMO array for the long-distance mode and the short-distance mode shown in FIG. 13. It can be learned that, in the long-distance mode, a uniform sparse linear array is formed on a radar array face. The array has a large antenna aperture, a sparse array spacing corresponding to a high angle resolution capability, and an unambiguous angle measurement range that meets a FOV range required in the long-distance node. In the short-distance mode, a compact (for example, a half-wavelength spacing) uniform array is formed on the radar array face, so that a requirement for a large unambiguous angle measurement range and a requirement for an angle resolution in the short-distance mode can be met.

In this embodiment of this application, in a multi-working mode (the long-distance mode and the short-distance mode), a transmit antenna gain and an FOV may be independently designed. A form of the transmit antenna is flexible when a scenario requirement is met. For example, when a transmit power is fixed, a long-distance antenna gain may be increased, so that a detection capability is improved. In addition, a plurality of different groups of receive antennas are combined for use, so that a quantity of effective virtual channels is increased without increasing a quantity of back-end ADC channels, overall array face performance is improved, and array face requirements in various scenarios are met.

In an embodiment, a detection apparatus is further provided in this embodiment of this application. The detection apparatus includes the antenna in the foregoing embodiments.

FIG. 15 is a schematic diagram of a structure of a detection apparatus. As shown in FIG. 15, the detection apparatus includes an antenna, a circuit board, and a housing.

It should be understood that the antenna structure in this embodiment of this application may be the antenna structure shown in FIG. 15, or may be another antenna structure. This is not limited in this application.

In an embodiment, an antenna is further provided in this embodiment of this application. The antenna includes a first antenna subarray group, a second antenna subarray group, and a third antenna subarray group. The first antenna subarray group includes at least one first antenna subarray, the second antenna subarray group includes at least one second antenna subarray, and the third antenna subarray group includes at least one third antenna subarray. Antenna subarrays in the first antenna subarray group, the second antenna subarray group, and the third antenna subarray group may be arranged in a first direction (for example, a horizontal direction or an azimuth direction). In the first antenna subarray group, the second antenna subarray group, and the third antenna subarray group, a distance between any two adjacent antenna subarrays in any antenna subarray group may be equal. Alternatively, a distance between any two adjacent antenna subarrays in any antenna subarray group may be unequal. Alternatively, a distance between any two adjacent antenna subarrays in any antenna subarray group may be partially equal and partially unequal. It should be understood that the unequal distance between any two adjacent antenna subarrays in the first antenna subarray group may be a requirement on an antenna design, so that a degree of freedom of the antenna design may be large. Alternatively, the unequal distance between any two adjacent antenna subarrays in any antenna subarray group may be caused by an engineering error, and the error may be within a preset distance (for example, the preset distance may be a wavelength over which the antenna works).

In the first antenna subarray group, the second antenna subarray group, and the third antenna subarray group, a distance between any two adjacent antenna subarray groups may be equal, or a distance between any two adjacent antenna subarray groups may be unequal, or a distance between any two adjacent antenna subarray groups may be partially equal and partially unequal. It should be understood that the unequal distance between any two adjacent antenna subarray groups may be a requirement on an antenna design, so that a degree of freedom of the antenna design may be large. Alternatively, the unequal distance between any two adjacent antenna subarray groups may be caused by an engineering error, and the error may be within a preset distance.

Optionally, if the antenna subarray (for example, the first antenna subarray, the second antenna subarray, and the third antenna subarray) includes a plurality of antenna elements (Rx shown in FIG. 15 is connected to two antenna subarrays, and each antenna subarray may include three antenna elements). A distance between two adjacent antenna elements in the antenna subarray may be equal to a distance between two adjacent antenna subarrays. Alternatively, a distance between two adjacent antenna elements in the antenna subarray may be unequal to a distance between two adjacent antenna subarrays.

Optionally, in a second direction (for example, a vertical direction), in any one of the first antenna subarray group, the second antenna subarray group, and the third antenna subarray group, any two antenna subarrays may be not staggered. Alternatively, any two antenna subarrays may be staggered. Alternatively, any two antenna subarrays may be partially staggered and partially not staggered. For example, staggering between any two antenna subarrays in the first antenna subarray group may be a requirement on an antenna design, so that a degree of freedom of the antenna design is large. Alternatively, staggering between any two antenna subarrays may be caused by an engineering error, and the error may be within a preset distance.

In the first antenna subarray group, the second antenna subarray group, and the third antenna subarray group, any two antenna subarray groups may be staggered. Alternatively, any two antenna subarray groups may be not staggered. Alternatively, any two antenna subarray groups may be not staggered or may be partially staggered and partially not staggered.

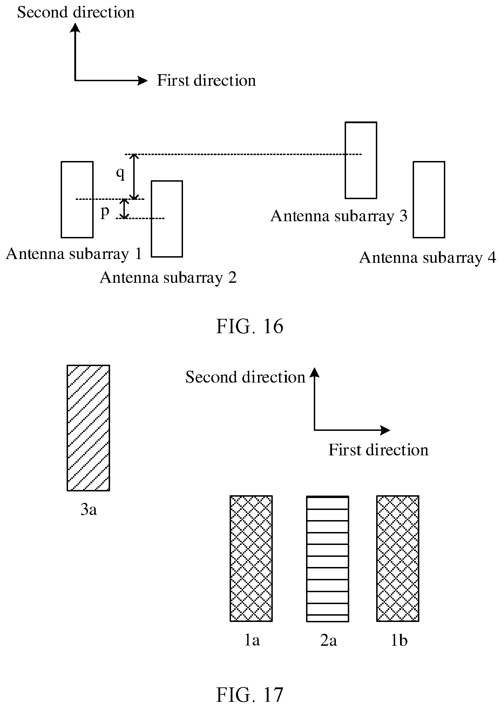

FIG. 16 is another schematic diagram of a structure of an antenna according to an embodiment of this application. As shown in FIG. 16, the antenna includes an antenna subarray 1, an antenna subarray 2, an antenna subarray 3, and an antenna subarray 4. The antenna subarray 1 may belong to a first antenna subarray group, the antenna subarray 2 and the antenna subarray 3 may belong to a second antenna subarray group, and the antenna subarray 4 may belong to a third antenna subarray group. In a first direction, a distance between the antenna subarray 1 and the antenna subarray 2 and a distance between the antenna subarray 2 and the antenna subarray 3 may be unequal, and the distance between the antenna subarray 2 and the antenna subarray 3 may be greater than the distance between the antenna subarray 1 and the antenna subarray 2. It should be understood that any one of the antenna subarray 1, the antenna subarray 2, the antenna subarray 3, and the antenna subarray 4 may include one or more antenna elements.

In a second direction, the antenna subarray 1, the antenna subarray 2, the antenna subarray 3, and the antenna subarray 4 may be staggered by a specific distance, and the staggered distance between any two antenna subarrays may be within a preset distance. For example, in the second direction, the staggered distance between the antenna subarray 1 and the antenna subarray 2 is p, and the staggered distance between the antenna subarray 1 and the antenna subarray 3 is q. Optionally, p and/or q are/is less than the preset distance (for example, the preset distance may be a wavelength over which the antenna works).

In this embodiment of this application, a distance between two antenna elements may be a distance between centers of gravity of the two antenna elements. Alternatively, a distance between two antenna elements may be a distance between geometric centers of the two antenna elements. It should be understood that calculation of a distance between antenna elements is not specifically limited in this embodiment of this application.

A distance between two antenna subarrays (for example, a first antenna subarray and a second antenna subarray) may be a distance between centers of gravity (or geometric centers) of a first antenna element and a second antenna element. Optionally, the first antenna subarray may include the first antenna element, and the second antenna subarray may include the second antenna element. The first antenna element may be any antenna element in the first antenna subarray, and the second antenna element may be any antenna element in the second antenna subarray.

A distance between two antenna subarray groups (for example, the first antenna subarray group and the second antenna subarray group, where the first antenna subarray group includes the first antenna subarray, and the second antenna subarray group includes the second antenna subarray) may be a distance between centers of gravity (or geometric centers) of the first antenna element and the second antenna element. Optionally, the first antenna element may be any antenna element in the first antenna subarray, and the first antenna subarray may be any antenna subarray in the first antenna subarray group. The second antenna element may be any antenna element in the second antenna subarray, and the second antenna subarray may be any antenna subarray in the second antenna subarray group.

It should be understood that staggering of the antenna subarray 1 and the antenna subarray 2 may be understood as that a connection line between the centers of gravity (or the geometric centers) of the antenna subarray 1 and the antenna subarray 2 is not parallel to the first direction. Alternatively, staggering of the antenna subarray 1 and the antenna subarray 2 may be understood as that a connection line between the centers of gravity (or the geometric centers) of the antenna subarray 1 and the antenna subarray 2 intersects with the first direction.

FIG. 17 is another schematic diagram of a structure of an antenna according to an embodiment of this application. The antenna includes a first antenna subarray group, a second antenna subarray group, and a third antenna subarray group. For ease of description, an antenna subarray 1a and an antenna subarray 1b included in the first antenna subarray group are used as an example, an antenna subarray 2a included in the second antenna subarray group is used as an example, and a third antenna subarray 3a included in the third antenna subarray group is used as an example. A connection line between centers of gravity (or geometric centers) of the antenna subarray 1a and the antenna subarray 1b is parallel to a first direction, and the antenna subarray 1a and the antenna subarray 1b are located in a first row in a second direction. The antenna subarray 3a is located in a second row in the second direction, where the first row and the second row are different rows in the second direction. The antenna subarray 2a is located between the antenna subarray 1a and the antenna subarray 1b and is located in the first row in the second direction.

It should be understood that one antenna subarray 2a or a plurality of antenna subarrays 2a may be included between the antenna subarray 1a and the antenna subarray 1b.

Optionally, in the first direction, distances between the antenna subarray 3a, the antenna subarray 1a, and the antenna subarray 1b may be equal (for example, the distances are n), or may be unequal.

Optionally, in the first direction, a distance between the antenna subarray 1a and the antenna subarray 2a, and a distance between the antenna subarray 2a and the antenna subarray 1b may be equal (for example, the distances are m), or may be unequal. Optionally, n is greater than m.

The foregoing arrangement of the first antenna subarray group, the second antenna subarray group, and the third antenna subarray group in the second direction is merely provided as an example. A quantity of antenna subarrays included in the first antenna subarray group, the second antenna subarray group, and the third antenna subarray group is not limited. For example, each antenna subarray group may include more or fewer antenna subarrays as required. In addition, antenna subarrays in each antenna subarray group may be in a same row or in different rows in the second direction, and antenna subarrays of different antenna subarray groups may be in a same row or in different rows in the second direction.

In this embodiment of this application, the first antenna subarray and the third antenna subarray are located in different rows in a same direction. The second antenna subarray is arranged between different first antenna subarrays, or between different third antenna subarrays, or between the first antenna subarray and the third antenna subarray, so that the antenna can be extended from a one-dimensional array to a two-dimensional array. In addition, the antenna subarray in the second antenna subarray group is inserted into the first antenna subarray group, so that two modes with different density degrees can be formed, and the antenna can be miniaturized.

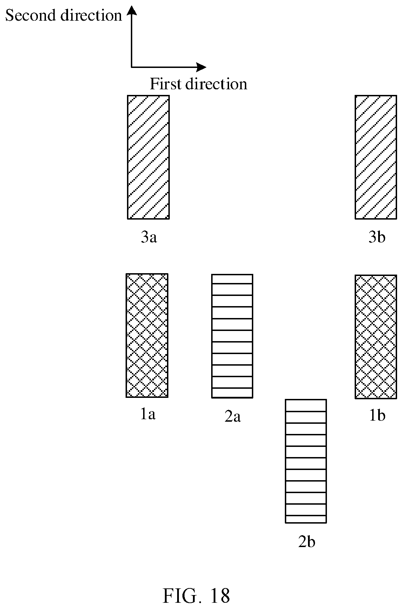

FIG. 18 is another schematic diagram of a structure of an antenna according to an embodiment of this application. For example, a first antenna subarray group includes an antenna subarray 1a and an antenna subarray 1b, a third antenna subarray group includes an antenna subarray 3a and an antenna subarray 3b, and a second subarray group includes an antenna subarray 2a and an antenna subarray 2b. A connection line between centers of gravity (or geometric centers) of the antenna subarray 3a and the antenna subarray 3b is parallel to a first direction, and the antenna subarray 3a and the antenna subarray 3b are located in a first row in a second direction. A connection line between centers of gravity (or geometric centers) of the antenna subarray 1a and the antenna subarray 1b is parallel to the first direction, and the antenna subarray 1a and the antenna subarray 1b are located in a second row in the second direction, where the first row and the second row are different rows in the second direction. The antenna subarray 2a is located between the antenna subarray 1a and the antenna subarray 1b and in the second row in the second direction. The antenna subarray 2b is located between the antenna subarray 1a and the antenna subarray 1b and in a third row in the second direction. The first row, the second row, and the third row are different rows in the second direction. Every two of the first row, the second row, and the third row may not overlap in the second direction (as shown in FIG. 18). Optionally, every two of the first row, the second row, and the third row partially overlap in the second direction (not shown).

FIG. 18 is described by using an example in which each antenna subarray group includes two antenna subarrays. Each antenna subarray group may further include more or fewer other antenna subarrays, and quantities of antenna subarrays in different antenna subarray groups may be the same or different. The foregoing arrangement of the first antenna subarray group, the second antenna subarray group, and the third antenna subarray group in the second direction is merely provided as an example. Antenna subarrays in each antenna subarray group may be in a same row or may be in different rows in the second direction, and antenna subarrays in different antenna subarray groups may be in a same row or may be in different rows in the second direction.

All antenna subarrays in the second antenna subarray group may be inserted into the first antenna subarray group. Optionally, some antenna subarrays in the second antenna subarray group are inserted into the first antenna subarray group, and the other antenna subarrays in the second antenna subarray group are inserted into the third antenna subarray group.

Optionally, in the first direction, a distance between the antenna subarray 1a and the antenna subarray 1b, and a distance between the antenna subarray 3a and the antenna subarray 3b may be equal (for example, the distance is n), or may be unequal. Spacings between antenna subarrays in the first antenna subarray group may be the same or different, spacings between antenna subarrays in the second antenna subarray group may be the same or different, and spacings between antenna subarrays in the third antenna subarray group may be the same or different. The spacings between different subarray groups may be the same or different.

Optionally, in the first direction, a distance between the antenna subarray 2a and the antenna subarray 1a, a distance between the antenna subarray 2a and the antenna subarray 2b, and a distance between the antenna subarray 2b and the antenna subarray 1b may be equal (for example, the distance is m), or may be unequal.

Optionally, n is greater than m.

It can be learned from FIG. 17 and FIG. 18 that, in this application, layouts of the first antenna subarray group, the second antenna subarray group, and the third antenna subarray group that work in the two modes in the second direction are flexible, locations of different antenna subarrays in the first antenna subarray group in the second direction may be the same or different, locations of different antenna subarrays in the second antenna subarray group in the second direction may be the same or different, and locations of different antenna subarrays in the third antenna subarray group in the second direction may be the same or different. In other words, the layout of antenna subarrays in each subarray group in the second direction may be relatively staggered or relatively not staggered. In addition, layouts of antenna subarrays in different antenna subarray groups in the first antenna subarray group, the second antenna subarray group, and the third antenna subarray group may be relatively staggered or relatively not staggered in the second direction.

The antenna subarray in this application may be an array including a plurality of antenna elements or a single antenna element.

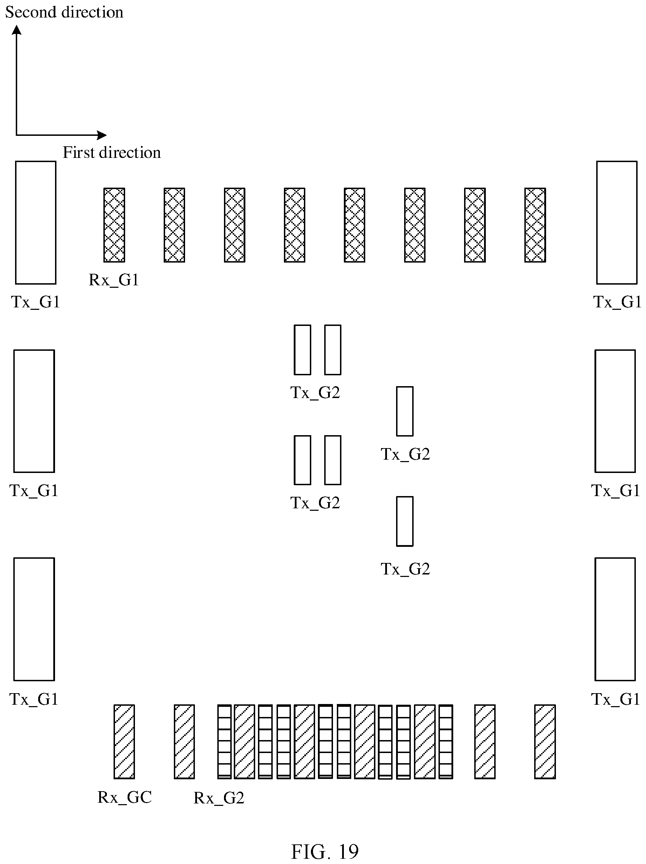

FIG. 19 is a schematic diagram of a structure of an antenna according to an embodiment of this application. The antenna includes a transmit antenna array and a receive antenna array. The transmit antenna array includes Tx_G1 (including six transmit antenna subarrays) and Tx_G2 (including six transmit antenna subarrays). Every two of the six transmit antenna subarrays are located in different rows in a second direction. Tx_G1 is a transmit antenna in a long-distance mode, and Tx_G2 is a transmit antenna in a short-distance mode. A gain of Tx_G1 is greater than that of Tx_G2.

For example, this application is described by using an example in which Tx_G2 is divided into four rows from top to bottom in the second direction. A first row includes two antenna subarrays, a second row includes one antenna subarray, a third row includes two antenna subarrays, and a fourth row includes one antenna subarray.

The receive antenna array includes three antenna subarray groups: a third antenna subarray group Rx_G1 (including eight receive antenna subarrays), a second antenna subarray group Rx_G2 (including eight receive antenna subarrays), and a first antenna subarray group Rx_GC (including eight receive antenna subarrays). As shown in FIG. 19, the third antenna subarray group Rx_G1 and the first antenna subarray group Rx_GC form a receive antenna array in the long-distance mode, and the second antenna subarray group Rx_G2 and the first antenna subarray group Rx_GC form a receive antenna array in the short-distance mode. Antenna subarrays of Rx_G2 are arranged between antenna subarrays in the first antenna subarray group Rx_GC. A quantity of antenna subarrays of Rx_G2 between every two adjacent antenna subarrays in the first antenna subarray group Rx_GC may be the same or different, and the antenna subarrays may be evenly inserted or centrosymmetrically inserted. For example, in FIG. 19, there is a same quantity (for example, one) of antenna subarrays of Rx_G2 between first two antenna subarrays and last two antenna subarrays of the first antenna subarray group RX_GC, and there is a same quantity (for example, two) of antenna subarrays of Rx_G2 between every two adjacent antenna subarrays other than the first two antenna subarrays and last two antenna subarrays of the first antenna subarray group RX_GC. Optionally, a quantity of antenna subarrays of Rx_G2 between every two adjacent antenna subarrays in the third antenna subarray group Rx_G1 may be the same or different. Optionally, the antenna subarrays of Rx_G2 may be evenly or centrosymmetrically inserted into all antenna subarrays of the third antenna subarray group Rx_G1. Alternatively, the antenna subarrays of Rx_G2 may be evenly or centrosymmetrically inserted into some antenna subarrays of the third antenna subarray group Rx_G1. Optionally, the quantity of antenna subarrays of Rx_G2 between the antenna subarray of the first antenna subarray group Rx_GC and the adjacent antenna subarray of the third antenna subarray group Rx_G1 may be the same as or different from the quantity of antenna subarrays of Rx_G2 in two adjacent antenna subarrays of the first antenna subarray group Rx_GC. Alternatively, the quantity of antenna subarrays of Rx_G2 between the antenna sub array of the first antenna subarray group Rx_GC and the adjacent antenna subarray of the third antenna subarray group Rx_G1 may be the same as or different from the quantity of antenna subarrays of Rx_G2 in two adjacent antenna subarrays of the third antenna subarray group Rx_G1.

In the long-distance mode, the antenna transmits a signal by using Tx_G1, and the third antenna subarray group Rx_G1 and the first antenna subarray group Rx_GC receive the signal. In the short-distance mode, the antenna transmits a signal by using Tx_G2, and the second antenna subarray group Rx_G2 and the first antenna subarray group Rx_GC receive the signal.

In an embodiment, types of antenna subarrays in the third antenna subarray group Rx_G1, the second antenna subarray group Rx_G2, and the first antenna subarray group Rx_GC are the same. Alternatively, gains of antenna subarrays in the third antenna subarray group Rx_G1, the second antenna subarray group the second antenna subarray group Rx_G2, and the first antenna subarray group Rx_GC are the same. Compared with FIG. 10, the receive antenna array (three antenna subarray groups) shown in FIG. 10 is a one-dimensional array, which is an example. Locations of antenna subarrays in the three antenna subarray groups in another direction are not limited in this application. For example, locations of some antenna subarrays may change or be staggered in a second direction relative to locations in FIG. 10. For example, FIG. 19 shows a two-dimensional array of the three antenna subarray groups.

FIG. 19 shows that transmit antennas corresponding to different modes may be different. Optionally, transmit antennas corresponding to different modes may alternatively be the same. The foregoing arrangement of the first antenna subarray group, the second antenna subarray group, and the third antenna subarray group in the second direction is merely provided as an example. A quantity of antenna subarrays included in the first antenna subarray group, the second antenna subarray group, and the third antenna subarray group is not limited. For example, each antenna subarray group may include more or fewer antenna subarrays as required. In addition, antenna subarrays in each antenna subarray group may be in a same row or in different rows in the second direction, and antenna subarrays of different antenna subarray groups may be in a same row or in different rows in the second direction.

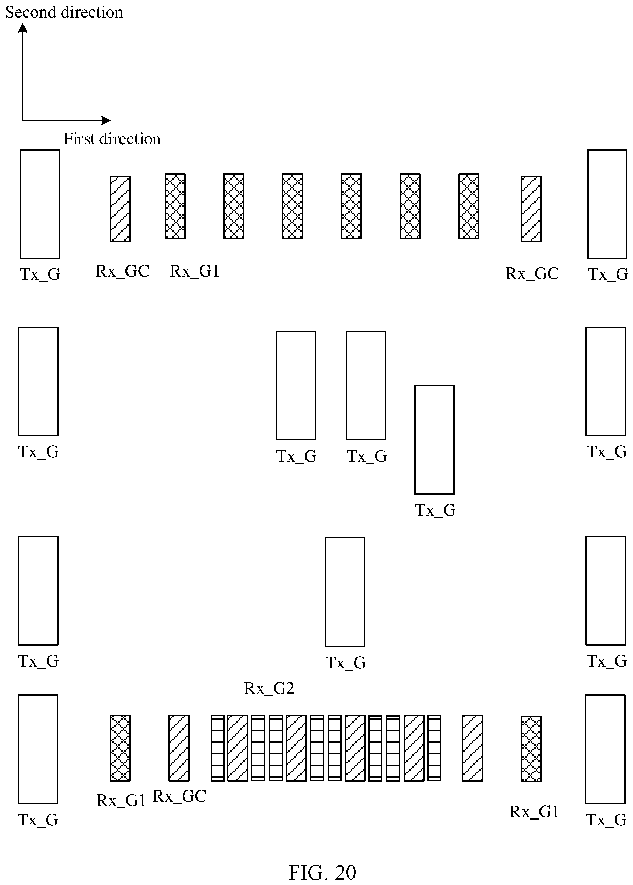

FIG. 20 is a schematic diagram of a structure of an antenna according to an embodiment of this application. The antenna includes a transmit antenna array and a receive antenna array. Transmit antennas corresponding to two modes are the same. The transmit antenna array includes Tx_G (including 12 transmit antenna subarrays). An example in which every two transmit antenna subarrays Tx_G of eight transmit antenna subarrays Tx_G are located in different rows in a second direction is used for description. Tx_G may be a transmit antenna in a first mode, or may be a transmit antenna in a second mode.

The 12 antenna subarrays of the transmit array are divided into five rows from top to bottom in the second direction. A first row includes two antenna subarrays, a second row includes four antenna subarrays, a third row includes one antenna subarray, a fourth row includes three antenna subarrays, and a fifth row includes two antenna subarrays. It can be learned that a layout of transmit antennas in the second direction may be flexibly designed according to a requirement, so as to help separately design radiation capabilities in an azimuth direction and a pitch direction that are corresponding to the antenna. It can also be learned from FIG. 19 and FIG. 20 that, a layout of locations of transmit antennas corresponding to different modes in a first direction is also flexible, and relative locations of different transmit antennas in the first direction may be staggered or may be not staggered. This is not limited in this application.

The receive antenna array includes three antenna subarray groups: a third antenna subarray group Rx_G1 (including eight receive antenna subarrays), a second antenna subarray group Rx_G2 (including eight receive antenna subarrays), and a first antenna subarray group Rx_GC (including eight receive antenna subarrays). As shown in FIG. 20, the third antenna subarray group Rx_G1 and the first antenna subarray group Rx_GC form a receive antenna array in a first mode. A second antenna subarray group Rx_G2 is arranged between any two adjacent antenna subarrays in the first antenna subarray group Rx_GC, and forms a receive antenna array in a second mode with the first antenna subarray group Rx_GC. Antenna subarrays of Rx_G2 are arranged between antenna subarrays in the first antenna subarray group Rx_GC. A quantity of antenna subarrays of Rx_G2 between every two adjacent antenna subarrays in the first antenna subarray group Rx_GC may be the same or different, and the antenna subarrays may be evenly inserted or centrosymmetrically inserted. For example, in FIG. 20, there is a same quantity (for example, one) of antenna subarrays of Rx_G2 between first two antenna subarrays and last two antenna subarrays of the first antenna subarray group RX_GC, and there is a same quantity (for example, two) of antenna subarrays of Rx_G2 between every two adjacent antenna subarrays other than the first two antenna subarrays and last two antenna subarrays of the first antenna subarray group RX_GC. Optionally, a quantity of antenna subarrays of Rx_G2 between every two adjacent antenna subarrays in the third antenna subarray group Rx_G1 may be the same or different. Optionally, the antenna subarrays of Rx_G2 may be evenly or centrosymmetrically inserted into all antenna subarrays of the third antenna subarray group Rx_G1. Alternatively, the antenna subarrays of Rx_G2 may be evenly or centrosymmetrically inserted into some antenna subarrays of the third antenna subarray group Rx_G1. Optionally, the quantity of antenna subarrays of Rx_G2 between the antenna subarray of the first antenna subarray group Rx_GC and the adjacent antenna subarray of the third antenna subarray group Rx_G1 may be the same as or different from the quantity of antenna subarrays of Rx_G2 in two adjacent antenna subarrays of the first antenna subarray group Rx_GC. Alternatively, the quantity of antenna subarrays of Rx_G2 between the antenna subarray of the first antenna subarray group Rx_GC and the adjacent antenna subarray of the third antenna subarray group Rx_G1 may be the same as or different from the quantity of antenna subarrays of Rx_G2 in two adjacent antenna subarrays of the third antenna subarray group Rx_G1.

In the first mode, the antenna transmits a signal by using Tx_G, and the third antenna subarray group Rx_G1 and the first antenna subarray group Rx_GC receive the signal. In the second mode, the antenna transmits a signal by using Tx_G, and the second antenna subarray group Rx_G2 and the first antenna subarray group Rx_GC receive the signal.

In an embodiment, types of antenna subarrays in the third antenna subarray group Rx_G1, the second antenna subarray group Rx_G2, and the first antenna subarray group Rx_GC are the same, or gains of antenna subarrays in the third antenna subarray group Rx_G1, the second antenna subarray group Rx_G2, and the first antenna subarray group Rx_GC are the same.

Compared with the antenna shown in FIG. 19, different modes in FIG. 19 have different transmit antennas, the antenna shown in FIG. 20 may enable transmit antennas in the first mode and the second mode to be the same, so that the transmit antennas in the first mode and the second mode do not need to be distinguished, and virtual apertures in the two modes are the same. When transmit arrays corresponding to the two modes are the same, different (azimuth and pitch) angle measurement requirements are implemented through mode switching.

In this embodiment of this application, the second antenna subarray group is dispersedly inserted into different antenna subarrays in the first antenna subarray group Rx_GC. Optionally, the second antenna subarray group is centrally inserted into the first antenna subarray group Rx_GC. Some antenna subarrays in the second antenna subarray group are centrally inserted or dispersedly inserted into the third antenna subarray group Rx_G1, and the other antenna subarrays in the second antenna subarray group are centrally inserted or dispersedly inserted into the first antenna sub array group Rx_GC.

It can be learned from FIG. 20 that different antenna subarrays in the first antenna subarray group may be located in a same row or different rows in the second direction. Different antenna subarrays in the third antenna subarray group may be located in a same row or different rows in the second direction.

The foregoing arrangement of the first antenna subarray group, the second antenna subarray group, and the third antenna subarray group in the second direction is merely provided as an example. A quantity of antenna subarrays included in the first antenna subarray group, the second antenna subarray group, and the third antenna subarray group is not limited. For example, each antenna subarray group may include more or fewer antenna subarrays as required. In addition, antenna subarrays in each antenna subarray group may be in a same row or in different rows in the second direction, and antenna subarrays of different antenna subarray groups may be in a same row or in different rows in the second direction.

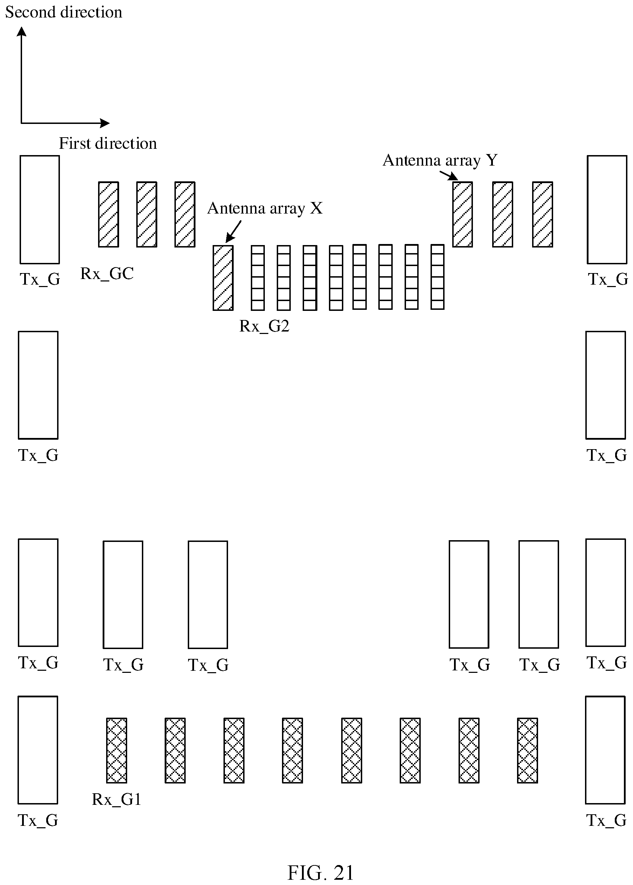

FIG. 21 is a schematic diagram of a structure of an antenna according to an embodiment of this application. The antenna includes a transmit antenna array and a receive antenna array. The transmit antenna array includes Tx_G (including 12 transmit antenna subarrays), and every two of the eight transmit antenna subarrays Tx_G are respectively located in different rows (such as a first row, a second row, a third row, and a fourth row from top to bottom) in a first direction. An example in which the other four transmit antenna subarrays Tx_G are inserted in the third row is used for description. Spacings between the six antenna subarrays in the third row may be the same or may be different. Spacings between the left three antenna subarrays in the third row may be the same or may be different, and spacings between the right three antenna subarrays in the third row may be the same or may be different. Tx_G may be a transmit antenna in a first mode, or may be a transmit antenna in a second mode.

The receive antenna array includes three antenna subarray groups: a third antenna subarray group Rx_G1 (including eight receive antenna subarrays), a second antenna subarray group Rx_G2 (including eight receive antenna subarrays), and a first antenna subarray group Rx_GC (including eight receive antenna subarrays). As shown in FIG. 21, the third antenna subarray group Rx_G1 and the first antenna subarray group Rx_GC form a receive antenna array in the first mode. The second antenna subarray group Rx_G2, as an extension of the first antenna subarray group Rx_GC in two dimensions: a horizontal dimension and a vertical dimension, is inserted between an antenna subarray X and an antenna subarray Y. The second antenna subarray group Rx_G2 and the first antenna subarray group Rx_GC form a receive antenna array in the second mode.

In the first mode, the antenna transmits a signal by using Tx_G, and the third antenna subarray group Rx_G1 and the first antenna subarray group Rx_GC receive the signal. In the second mode, the antenna transmits a signal by using Tx_G, and the second antenna subarray group Rx_G2 and the first antenna subarray group Rx_GC receive the signal.

In an embodiment, types of antenna subarrays in the third antenna subarray group Rx_G1, the second antenna subarray group Rx_G2, and the first antenna subarray group Rx_GC are the same, or gains of antenna subarrays in the third antenna subarray group Rx_G1, the second antenna subarray group Rx_G2, and the first antenna subarray group Rx_GC are the same.

It can be learned that, when transmit arrays corresponding to the two modes are the same, large aperture gains can be obtained in both an azimuth direction and a pitch direction. In addition, according to this embodiment of this application, the second subarray group is staggered from the first antenna subarray group in the second direction, and a radiation capability of the antenna in the pitch direction can be further increased.

Optionally, the second antenna subarray group may be centrally inserted or dispersedly inserted into the third antenna subarray group Rx_G1, or some antenna subarrays in the second antenna subarray group are centrally inserted or dispersedly inserted into the third antenna subarray group Rx_G1, and the other antenna subarrays in the second antenna subarray group are centrally inserted or dispersedly inserted into the first antenna subarray group Rx_GC. Different antenna subarrays in the second antenna subarray group may be located in a same row in the second direction. Optionally, different antenna subarrays in the second antenna subarray group may be located in different rows in the second direction.

It can be learned from this embodiment of this application that, the second antenna subarray group Rx_G2 may be inserted into only one group of two adjacent antenna subarrays (an antenna subarray X and an antenna subarray Y) in the first antenna subarray group Rx_GC, that is, the antenna subarrays in the second antenna subarray group Rx_G2 are centrally inserted into the first antenna subarray group Rx_GC (the antenna subarray X and the antenna subarray Y). Optionally, the antenna subarrays in the second antenna subarray group Rx_G2 may alternatively be dispersedly inserted between a plurality of different antenna subarrays in the first antenna subarray group Rx_GC, as in the foregoing other embodiments.

The foregoing arrangement of the first antenna subarray group, the second antenna subarray group, and the third antenna subarray group in the second direction is merely provided as an example. A quantity of antenna subarrays included in the first antenna subarray group, the second antenna subarray group, and the third antenna subarray group is not limited. For example, each antenna subarray group may include more or fewer antenna subarrays as required. In addition, antenna subarrays in each antenna subarray group may be in a same row or in different rows in the second direction, and antenna subarrays of different antenna subarray groups may be in a same row or in different rows in the second direction.

It can be learned from the embodiments shown in FIG. 20 and FIG. 21 that, two modes are implemented through switching, and a large gain can be obtained in the azimuth direction and the pitch direction. FIG. 21 may further increase a radiation capability of the antenna in the pitch direction.

FIG. 17 to FIG. 21 are specific embodiments in which different antenna subarrays in different antenna subarray groups are staggered in the second direction, that is, a case in which different antenna subarrays in a same antenna subarray group or different antenna subarrays in different antenna subarray groups are not in a same row in the second direction, or a case in which different antenna subarrays in a same antenna subarray group are distributed differently in the second direction, or a case in which different antenna subarrays in different antenna subarray groups are distributed differently in the second direction.

FIG. 17 to FIG. 21 also show specific embodiments in which different antenna subarrays in different antenna subarray groups are staggered in the first direction, that is, a case in which different antenna subarrays in a same antenna subarray group or different antenna subarrays in different antenna subarray groups are not in a same row in the first direction, or a case in which different antenna subarrays in a same antenna subarray group are distributed differently in the first direction, or a case in which different antenna subarrays in different antenna subarray groups are distributed differently in the first direction.

The antenna subarrays or antenna arrays in the accompanying drawings of embodiments of this application are merely examples. Different shapes are merely used to indicate different antenna subarray groups, and do not represent actual shapes of the antenna arrays or actual sizes of the antenna arrays. In other words, actual shapes, sizes, or types of the antenna arrays shown in the accompanying drawings may be the same, or partially the same, or all different.

Optionally, a radiation distance of the antenna provided in this embodiment of this application in the first working mode may be less than a radiation distance of the antenna in the second working mode. Alternatively, a radiation distance of the antenna in the first working mode may be equal to a radiation distance of the antenna in the second working mode. Alternatively, a radiation distance of the antenna in the first working mode may be greater than a radiation distance of the antenna in the second working mode.

Optionally, an antenna virtual aperture corresponding to the antenna in the first working mode provided in this embodiment of this application may be less than an antenna virtual aperture corresponding to the antenna in the second working mode. Alternatively, an antenna virtual aperture corresponding to the antenna in the first working mode may be equal to an antenna virtual aperture corresponding to the antenna in the second working mode. Alternatively, an antenna virtual aperture corresponding to the antenna in the first working mode may be greater than an antenna virtual aperture corresponding to the antenna in the second working mode.

In an embodiment, a terminal is further provided in this embodiment of this application. The terminal includes the foregoing detection apparatus.

In an embodiment, the terminal is a vehicle.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An antenna, wherein the antenna supports a first working mode and a second working mode, and the antenna comprises a first antenna subarray group, a second antenna subarray group, and a third antenna subarray group; and
the first antenna subarray group and the second antenna subarray group are used in the first working mode, and the first antenna subarray group and the third antenna subarray group are used in the second working mode.

2. The antenna according to claim 1, wherein
in a first direction, there is a second antenna subarray between a first antenna subarray and a third antenna subarray, the first antenna subarray belongs to the first antenna subarray group or the third antenna subarray group, the third antenna subarray belongs to the first antenna subarray group or the third antenna subarray group, and the second antenna subarray belongs to the second antenna subarray group.

3. The antenna according to claim 2, wherein in the first direction, an antenna subarray in either of the first antenna subarray group and the third antenna subarray group is not comprised between the first antenna subarray and the third antenna sub array.

4. The antenna according to claim 1, wherein

in a first direction, there is a second antenna subarray between a first antenna subarray and a third antenna subarray, the first antenna subarray belongs to the first antenna subarray group or the third antenna subarray group, the third antenna subarray belongs to the first antenna subarray group or the third antenna subarray group, and the second antenna subarray belongs to the second antenna subarray group; and

the first antenna subarray, the second antenna subarray, and the third antenna subarray are located in a first row in a second direction, and the second direction is perpendicular to the first direction.

5. The antenna according to claim 4, wherein

the antenna further comprises another second antenna subarray, and the another second antenna subarray belongs to the second antenna sub array group; and

the another second antenna subarray is located in a second row in the second direction, and the first row and the second row are different rows in the second direction.

6. The antenna according to claim 4 or 5, wherein if the first antenna subarray and the third antenna subarray belong to the first antenna subarray group, the third antenna subarray group is located in a third row in the second direction, and the first row and the third row are different rows in the second direction.

7. The antenna according to any one of claims 2 to 6, wherein

there is one second antenna subarray between the first antenna subarray and the third antenna subarray, and in the first direction, a distance between the first antenna subarray and the second antenna subarray is equal to a distance between the second antenna subarray and the third antenna sub array.

8. The antenna according to any one of claims 2 to 6, wherein

there are a plurality of second antenna subarrays between the first antenna subarray and the third antenna subarray, and in the first direction, a distance between the first antenna subarray and the second antenna subarray, a distance between two adjacent second antenna subarrays, and a distance between the second antenna subarray and the third antenna subarray are equal.

9. The antenna according to any one of claims 1 to 8, wherein

antenna subarrays in the first antenna subarray group are distributed at equal spacings in the first direction;

antenna subarrays in the second antenna subarray group are distributed at equal spacings in the first direction; and/or

antenna subarrays in the third antenna subarray group are distributed at equal spacings in the first direction.

10. The antenna according to any one of claims 2 to 9, wherein

in the first direction, the antenna further comprises a fourth antenna subarray and a fifth antenna subarray that are directly adjacent to each other, the fourth antenna subarray belongs to the first antenna subarray group or the third antenna subarray group, and the fifth antenna subarray belongs to the first antenna subarray group or the third antenna subarray group.

11. The antenna according to any one of claims 1 to 10, wherein a radiation distance of the antenna in the first working mode is less than or equal to a radiation distance of the antenna in the second working mode.

12. The antenna according to any one of claims 1 to 11, wherein an antenna virtual aperture corresponding to the first working mode is less than or equal to an antenna virtual aperture corresponding to the second working mode.

13. The antenna according to any one of claims 2 to 12, wherein

the first antenna subarray and the second antenna subarray are connected to a first channel through switching, and the third antenna subarray is connected to a second channel.

14. The antenna according to any one of claims 4 to 13, wherein

the antenna further comprises a sixth antenna subarray, and the sixth antenna subarray is arranged in the first direction, or the sixth antenna subarray is arranged in the second direction.

15. The antenna according to claim 14, wherein when the sixth antenna subarray is arranged in the second direction, the second direction is perpendicular to the first direction.

16. The antenna according to any one of claims 1 to 15, wherein the first antenna subarray group, the second antenna subarray group, and the third antenna subarray group are configured to transmit a signal or receive a signal.

17. A detection apparatus, wherein the detection apparatus comprises the antenna according to any one of claims 1 to 16.

18. A terminal, wherein the terminal comprises the detection apparatus according to claim 17.

19. The terminal according to claim 18, wherein the terminal is a vehicle.

Vehicle 100

Travel system 102
- ( Engine 118 )
- Transmission apparatus 120
- Energy source 119
- Wheels 121

Sensor system 104
- ( Global positioning system 122 )
- Inertial measurement unit 124
- Radar 126
- Laser rangefinder 128
- Camera 130

Control system 106
- ( Steering system 132 )
- Throttle 134
- Brake unit 136
- Computer vision system 140
- Route control system 142
- Obstacle avoidance system 144

Interface device 108
- ( Wireless communication system 146 )
- Vehicle-mounted computer 148
- Microphone 150
- Speaker 152

Computer system 112
- Processor 113
- Memory 114
  - Instructions 115

Power supply 110

User interface 116

FIG. 1

EP 4 322 333 A1

1a     2a     1b

FIG. 2

3a     2a     3b

FIG. 3

1a     2a     3a

FIG. 4

m     m     m

1a     2a     2b     1b

FIG. 5

n        n        n

1a       1b       3a       3b

FIG. 6

1c       1d       1a    2a    3a

FIG. 7

1a    2a    3a       3c       3d

FIG. 8

1a    2a    3a       1c       3c

FIG. 9

Tx_G1

Tx_G2

Tx_G1

Rx_G1

Rx_GC  Rx_G2

FIG. 10

MIMO radar
array in a long-
distance mode

MIMO radar array
in a short-distance
working mode

FIG. 11

Rx_G1    Rx_G2    Rx_GC

ADC

ADC

FIG. 12

Tx_G2

Rx_GC

Rx_G2

Rx_G1

Tx_G1

FIG. 13

MIMO radar array
in a long-distance
mode

MIMO radar array
in a short-distance
working mode

FIG. 14

Circuit board          Housing

Antenna

Tx          Rx

FIG. 15

Second direction

First direction

q

p

Antenna subarray 1

Antenna subarray 2

Antenna subarray 3

Antenna subarray 4

FIG. 16

3a

Second direction

First direction

1a    2a    1b

FIG. 17

Second direction

First direction

3a

3b

1a

2a

1b

2b

FIG. 18

Second direction

First direction

Tx_G1

Rx_G1

Tx_G1

Tx_G1

Tx_G2

Tx_G2

Tx_G2

Tx_G2

Tx_G1

Tx_G1

Tx_G1

Tx_G1

Rx_GC

Rx_G2

FIG. 19

Second direction

First direction

Tx_G

Rx_GC     Rx_G1

Rx_GC     Tx_G

Tx_G

Tx_G     Tx_G

Tx_G

Tx_G

Tx_G

Tx_G

Tx_G

Tx_G

Rx_G2

Rx_G1   Rx_GC

Rx_G1

Tx_G     Tx_G

FIG. 20

Second direction

First direction

Tx_G

Rx_GC

Antenna array X

Rx_G2

Antenna array Y

Tx_G

Tx_G

Tx_G

Tx_G

Tx_G

Tx_G

Tx_G

Tx_G

Tx_G

Tx_G

Rx_G1

Tx_G

Tx_G

FIG. 21

## INTERNATIONAL SEARCH REPORT

| International application No. |
| --- |
| **PCT/CN2022/088337** |

| A. CLASSIFICATION OF SUBJECT MATTER |
| --- |
| H01Q 3/26(2006.01)i；G01S 7/02(2006.01)i |
| According to International Patent Classification (IPC) or to both national classification and IPC |

| B. FIELDS SEARCHED |
| --- |
| Minimum documentation searched (classification system followed by classification symbols) |
| H01Q G01S |
| Documentation searched other than minimum documentation to the extent that such documents are included in the fields searched |
| Electronic data base consulted during the international search (name of data base and, where practicable, search terms used) |
| WPI, EPODOC, CNPAT, CNKI: 雷达, 远距离, 近距离, MIMO, 角度分辨率, 稀疏, 开关, 车载, 天线, 阵列, radar, range, distance, near, far, switch, antenna, sparse, dense, array, 孔径, aperture |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | JP 2019071530 A (JAPAN RADIO CO., LTD.) 09 May 2019 (2019-05-09) description paragraphs 0024, 0056-0057, figures 17, 18 | 1-3, 7-9, 11-13, 16-19 |
| A | CN 111398963 A (JIANGSU XIEHE ELECTRONICS CO., LTD.) 10 July 2020 (2020-07-10) entire document | 1-19 |
| A | CN 111289960 A (ZHEJIANG LAB) 16 June 2020 (2020-06-16) entire document | 1-19 |
| A | CN 110988863 A (BEIJING UNIVERSITY OF TECHNOLOGY) 10 April 2020 (2020-04-10) entire document | 1-19 |
| A | US 2020103495 A1 (PANASONIC INTELLECTUAL PROPERTY MANAGEMENT CO., LTD.) 02 April 2020 (2020-04-02) entire document | 1-19 |
| A | WO 02075841 A2 (HRL LABORATORIES, LLC et al.) 26 September 2002 (2002-09-26) entire document | 1-19 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 June 2022** | **28 June 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/088337**

| Patent document cited in search report | | | Publication date (day/month/year) | Patent family member(s) | | | Publication date (day/month/year) |
|---|---|---|---|---|---|---|---|
| JP | 2019071530 | A | 09 May 2019 | None | | | |
| CN | 111398963 | A | 10 July 2020 | None | | | |
| CN | 111289960 | A | 16 June 2020 | None | | | |
| CN | 110988863 | A | 10 April 2020 | None | | | |
| US | 2020103495 | A1 | 02 April 2020 | CN | 110967671 | A | 07 April 2020 |
| | | | | DE | 102019125973 | A1 | 02 April 2020 |
| | | | | WO | 02075841 | A2 | 26 September 2002 |
| | | | | EP | 1371110 | A2 | 17 December 2003 |
| WO | 02075841 | A2 | 26 September 2002 | JP | 2004532546 | A | 21 October 2004 |
| | | | | US | 6388631 | B1 | 14 May 2002 |
| | | | | AU | 2002250036 | A1 | 03 October 2002 |
| | | | | EP | 1371110 | A2 | 17 December 2003 |
| | | | | TW | 538560 | B | 21 June 2003 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110482835
- CN 202111100999